# EUROPEAN PATENT APPLICATION

(11) **EP 1 571 017 A1**
(43) Date of publication of application: **07.09.2005**
(21) Application number: 03813290.8
(22) Date of filing: 17.09.2003
(51) Int. Cl.: B60H 1/00

(54) **COOLING DEVICE FOR CONSTRUCTION MACHINES**

(30) Priority: 13.12.2002 JP 2002362435
(71) Applicant: Shin Caterpillar Mitsubishi Ltd., Tokyo 158-8530 (JP)
(72) Inventor: FUJITA, Kouhei, SHIN CATERPILLAR MITSUBISHI LTD., Setagaya-ku, Tokyo 158-8530 (JP); YOKOTA, Kenichi, SHIN CATERPILLAR MITSUBISHI LTD., Setagaya-ku, Tokyo 158-8530 (JP); YAMADA, Kyoko, SHIN CATERPILLAR MITSUBISHI LTD., Setagaya-ku, Tokyo 158-8530 (JP); KOJIMA, Shigeru, SHIN CATERPILLAR MITSUBISHI LTD., Setagaya-ku, Tokyo 158-8530 (JP); YAMAKAWA, Atsushi, SHIN CATERPILLAR MITSUBISHI LTD, Setagaya-ku,2Tokyo 158-8530 (JP); MASAYASU, Takao, SHIN CATERPILLAR MITSUBISHI LTD., Setagaya-ku, Tokyo 158-8530 (JP); OKUDAIRA, Takahiro, SEIRYO ENGINEERING CO., LTD., Kobe-shi, Hyogo 652-0863 (JP); IGUCHI, Masafumi, c/o SEIRYO ENGINEERING CO. LTD., Kobe-shi, Hyogo 652-0863 (JP)
(74) Representative: Lemoine, Robert
(86) International application number: PCT/JP2003/011857
(87) International publication number: WO 2004/054828

(57) **Abstract**

The air conditioner capacitor is arranged at the front side of the oil cooler or the radiator against the flow of the cooling air, thereby carrying out maintenance of the oil cooler and/or the radiator at the rear side without removing the air conditioner capacitor arranged at the front side, thus improving maintenance. The turbocharger cooler 11 is structured to change the postures so as to swing up and down between the cooling posture in which the turbocharger cooler 11 is arranged in parallel with the radiator 8 and an open posture in which the turbocharger cooler 11 is arranged such that the front side of the radiator 8 is exposed. The air conditioner capacitor 10 and the oil cooler 9 are also structured to change the postures so as to swing horizontally between the cooling posture in which the air conditioner capacitor 10 and the oil cooler 9 are arranged in parallel with the radiator 8 and an open posture in which the air conditioner capacitor 10 and the oil cooler 9 are arranged such that the front side of the radiator 8 is exposed.

## Description

### [Technical Field]

The present invention relates to a cooling device in a construction machine such as a hydraulic shovel.

### [Background of the Invention]

Generally a construction machine such as a hydraulic shovel is provided with a cooling device such as a radiator for cooling an engine and an oil cooler for cooling hydraulic fluid. The radiator and oil cooler are generally designed to be cooled with cooling air flowing thereto by rotation of a cooling fan. In this case, the oil cooler and the radiator are arranged to be superposed back and forth against the flow of the cooling air (Back To Back (BTB) method) or are arranged to be adjacent to each other from side to side (Side By Side (SBS) Method).

Moreover, recently an increasing number of construction machines have been installed with an air-conditioning device (air conditioners) in order to improve the working environment of an operator. With regards to the cooling of a capacitor for an air conditioner, a construction machine has been known structured such that an air conditioner capacitor is provided at the front side of the oil cooler or radiator so that the cooling fan for cooling the oil cooler and/or the radiator can also cool the air conditioner capacitor (for example, see Fig. 1 of Japanese Patent Publication No. 3223164).

Further, it is also known that a construction machine in which cooling air from a cooling fan for cooling the oil cooler and/or the radiator is used to cool not only the air conditioner capacitor but also compressed air generated by the turbocharger. In this case, the turbocharger cooler and the air conditioner capacitor are arranged on the front face side of the oil cooler while being adjacent to each other up and down, for example (see Japanese Published Unexamined Patent Application No. 2002-201940).

### [Disclosure of the Invention]

In the configuration of the cooling device as disclosed in Japanese Patent Publication No. 3223164, the air conditioner capacitor is fixed to the front face side of the oil cooler via a fitting, when maintenance such as inspection and repair of the radiator and/or the oil cooler is performed, the air conditioner capacitor arranged on the front face side must be removed, this is troublesome and causes a reduction in workability.

Further, in the configuration of the cooling device as disclosed in Japanese Published Unexamined Patent Application No. 2002-201940 such that the air conditioner capacitor and the turbocharger cooler are arranged up and down on the front side of the oil cooler and the radiator, in a case where the cooling device in this configuration is cleaned without removing the air conditioner capacitor and the turbocharger cooler arranged on the front side, a cleaning worker has to insert a cleaning tool into the space between the cooling device at the front side and the cooling device at the rear side to clean the cooling device while riding on the upper face of the upper structure, for example. Such a method of cleaning makes it difficult for the cleaning worker to directly and visually observe the core section of the cooling device (particularly the core section of the cooling device arranged at the lower side). This causes a problem in which there is a risk of damaging the cooling core during cleaning. Such problems are intended to be solved by the present invention.

The present invention has been made in view of the above present condition for the purpose of solving these problems. In construction machinery in which a plurality of cooling devices including an air conditioner capacitor are arranged to be superposed back and forth against the flow of the cooling air, the air conditioner capacitor is structured to change the postures between a cooling posture in which the air conditioner capacitor is arranged in parallel with another cooling device and an open posture in which the front side or the rear side of another cooling device is exposed.

By the configuration as described above, when maintenance such as cleaning, inspection and repair of the cooling device is performed, by allowing the air conditioner capacitor to have an open posture, maintenance of another cooling devices can be performed without removing the air conditioner capacitor, thereby improving workability in maintenance.

In the configuration as described above, the air conditioner capacitor and the turbocharger cooler are arranged at the front side or at the rear side of an oil cooler and/or a radiator against the flow of the cooling air such that the air conditioner capacitor and the turbocharger cooler are structured to change the postures between the cooling posture in which the air conditioner capacitor and the turbocharger cooler are arranged in parallel with the oil cooler and/or the radiator and an open posture in which the front side or the rear side of the oil cooler and/or the radiator is exposed.

The air conditioner capacitor and the turbocharger cooler may also be arranged at the front side or at the rear side of an oil cooler and/or a radiator against the flow of the cooling air such that the air conditioner capacitor is structured to change the postures between the cooling posture in which the air conditioner capacitor is arranged in parallel with the oil cooler and/or the radiator and an open posture in which the front side or the rear side of the oil cooler and/or the radiator is exposed.

Further, the above-described configuration can be adapted, in a case where the oil cooler and the radiator are arranged adjacent to each other from side to side against the flow of the cooling air and in a case where the oil cooler and the radiator are arranged to be superposed back and forth against the flow of the cooling air, however, in a case where the oil cooler and the radiator are arranged to be superposed back and forth against the flow of the cooling air, the air conditioner capacitor is structured to change the postures between the cooling posture in which the oil cooler is arranged in parallel with the radiator and an open posture in which the front side or the rear side of the radiator is exposed, thereby further contributing to improvements in maintenance.

In the configuration of the cooling device of the present invention, the air conditioner capacitor and/or the turbocharger cooler is/are swingably supported by the upper part of the radiator and/or the oil cooler so as to be swing up and down, or the air conditioner capacitor and/or the turbocharger cooler is/are swingably supported by the left and right sides of the radiator or the oil cooler so as to swing back and forth, thereby allowing the turbocharger cooler and/or the air conditioner capacitor to change the postures between the cooling posture and the open posture.

Furthermore, a pipe connected to the air conditioner capacitor and/or the turbocharger cooler can be deformed in accordance with the posture change of the air conditioner capacitor and/or the turbocharger cooler, thereby preventing the pipe from being deteriorated due to the posture change of the turbocharger cooler and/or the air conditioner capacitor.

### BRIEF DESCRIPTION OF THE DRAWINGS

Fig. 1 is a plane view showing a hydraulic shovel.
Fig. 2 is a side view showing the main part of the cooling device having the cooling posture in the first Embodiment.
Fig. 3 is a side view showing the main part of the cooling device having an open posture in the first Embodiment.
Fig. 4 is a perspective view showing the main part of the cooling device 1 having an open posture in the first Embodiment.
Fig. 5 is a perspective view showing the main part of the cooling device 1 having an open posture in the first Embodiment.
Fig. 6 is a perspective view showing the main part of the cooling device 1 having an open posture in the first Embodiment.
Fig. 7 is a side view showing the main part of the cooling device 1 having an open posture in the second Embodiment.
Fig. 8 is a side view showing the main part of the cooling device 1 having an open posture in the second Embodiment.
Fig. 9 is a perspective view showing the main part of the cooling device 1 having an open posture in the second Embodiment.
Fig. 10 is a perspective view showing the main part of the cooling device 1 having an open posture in the third Embodiment.
Fig. 11 is a front view showing the main part of the cooling device 1 having an open posture in the fourth Embodiment.
Fig. 12 is a front view showing the main part of the cooling device 1 having an open posture in the fourth Embodiment.
Fig. 13 is a plane view showing the main part of the cooling device 1 having an open posture in the fourth Embodiment.
Fig. 14 is a side view showing the main part of the cooling device 1 having an open posture in the fourth Embodiment.

### [Best Mode for Carrying Out the Invention]

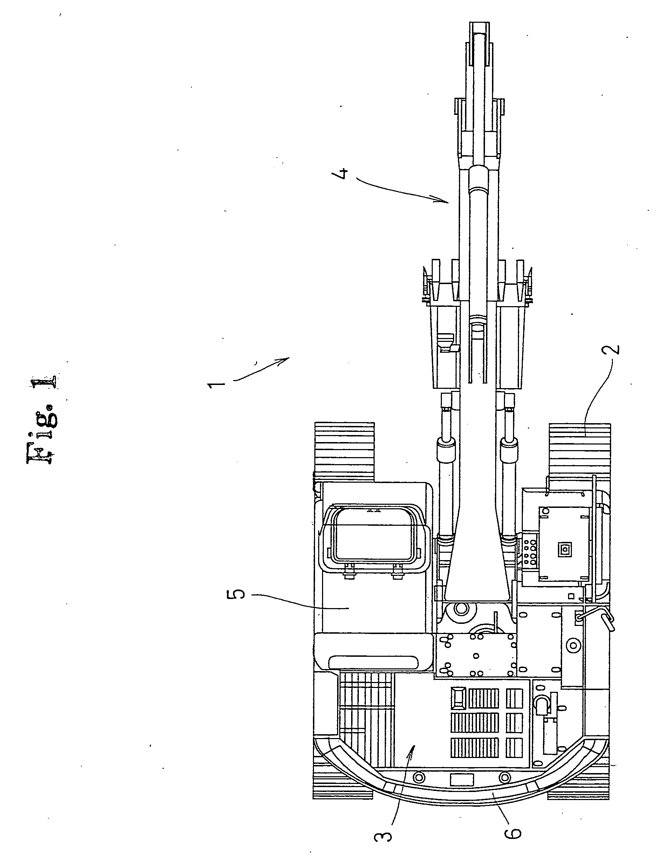

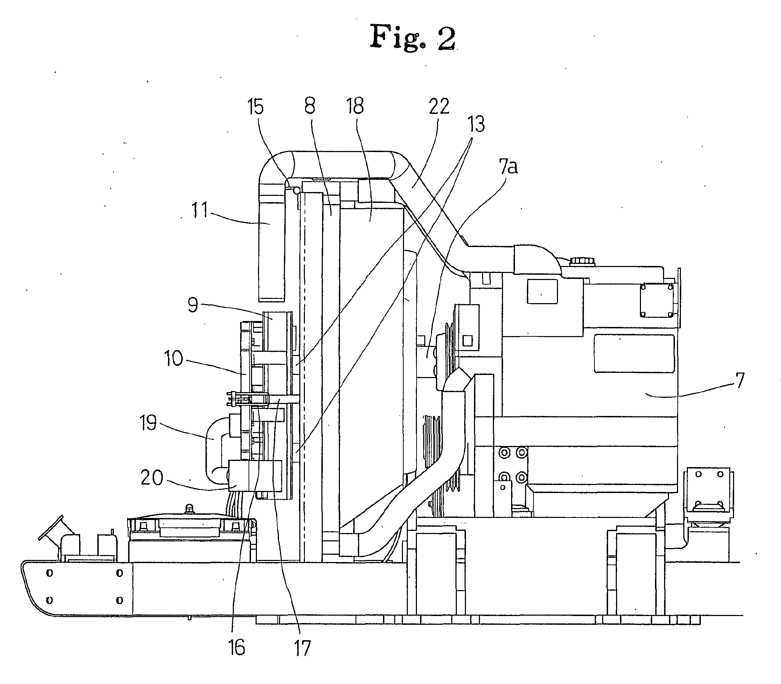

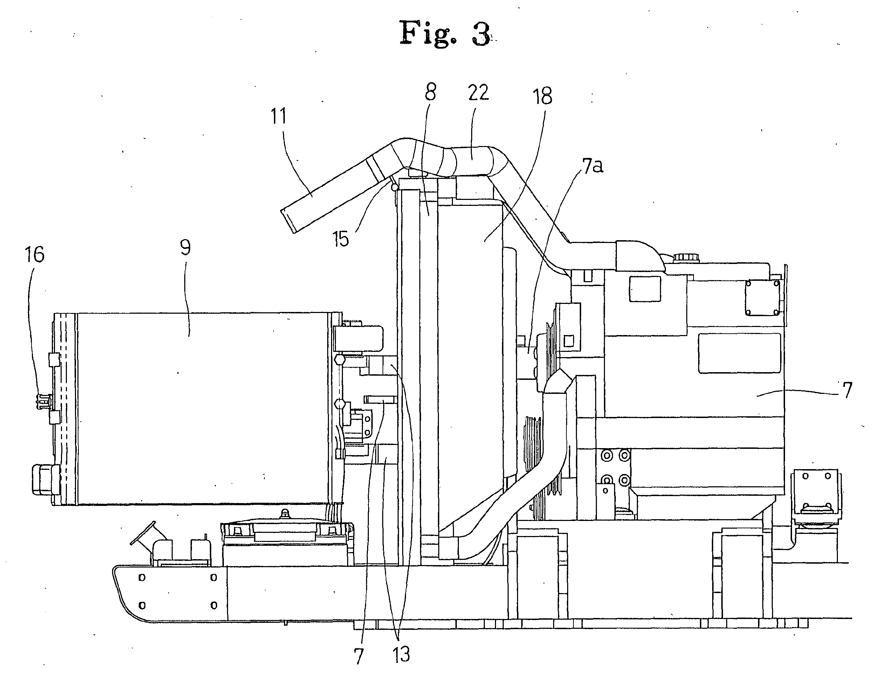

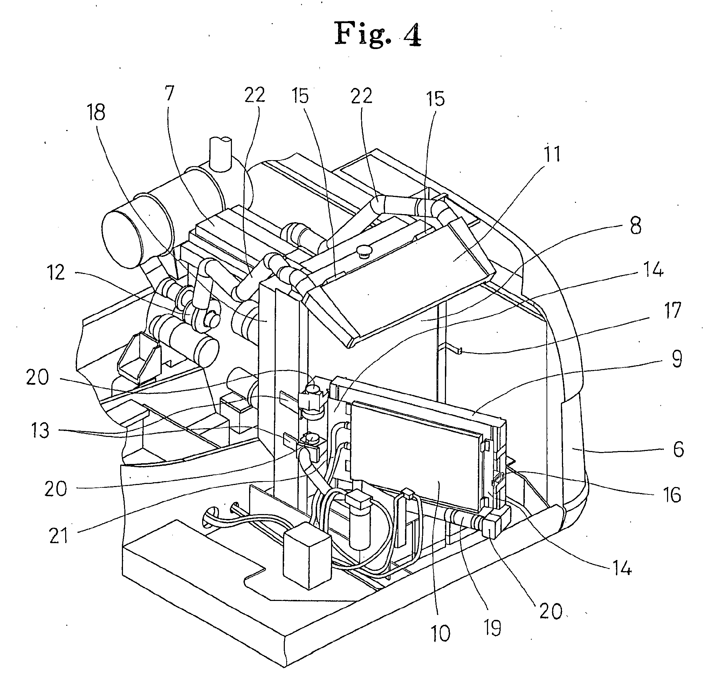

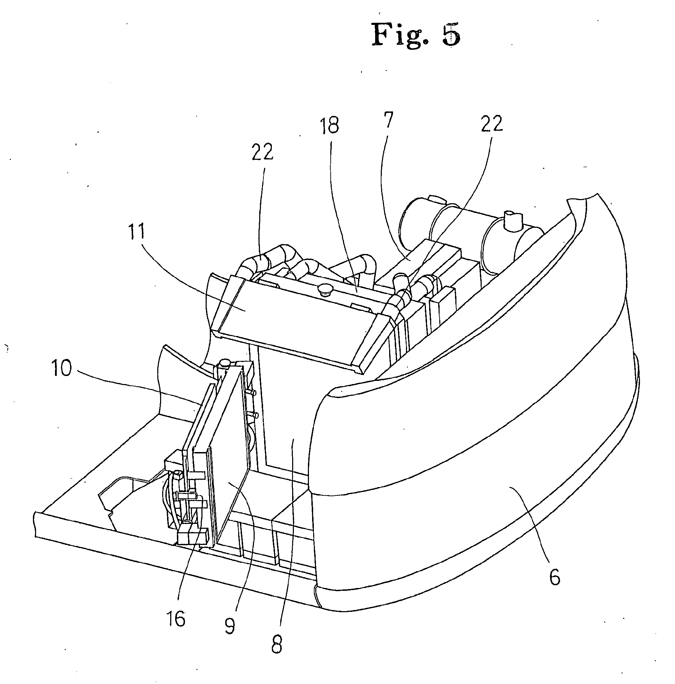

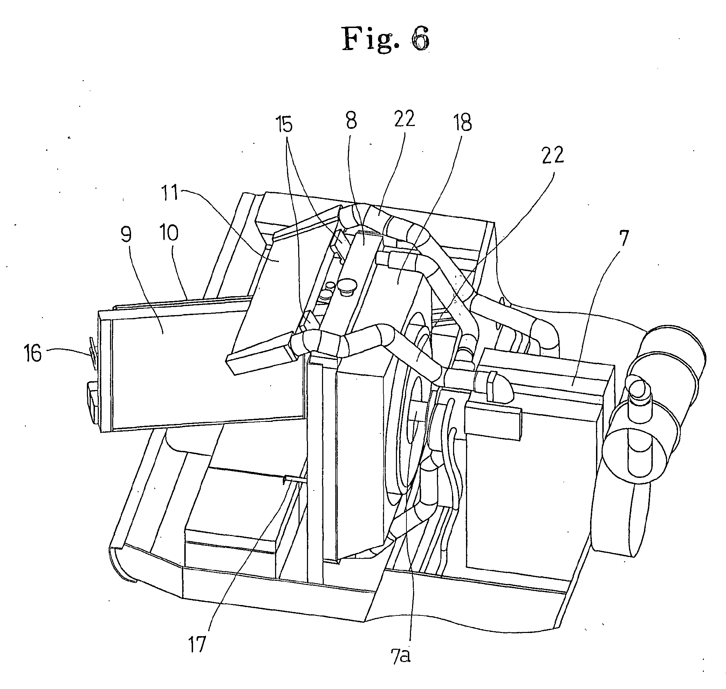

The first embodiment of the present invention will be described with reference to Fig. 1 to Fig. 6. In the figures, the reference numeral 1 denotes a hydraulic shovel. The hydraulic shovel 1 is composed of a crawler-type lower structure 2, an upper structure 3 rotatably supported by the lower structure 2; and a front attachment 4 attached to the upper structure 3. Further, the upper structure 3 also includes a cab 5 and a counterweight 6 or the like as well as various devices and units such as an engine 7 as a source of power, cooling devices such as a radiator 8, an oil cooler 9, an air conditioner capacitor 10, and a turbocharger cooler 11 which will be described later, a hydraulic pump and a valve device (not shown) .

The radiator 8 is a cooling device for cooling the engine 7. The oil cooler 9 is a cooling device for cooling hydraulic fluid and the air conditioner capacitor 10 is a cooling device for cooling and liquefying the cooling medium for cooling. The turbocharger cooler 11 is a cooling device for cooling air compressed by the turbocharger 12. These cooling devices 8 to 11 are structured to be cooled by cooling air flowing thereto by the rotation of a cooling fan (not shown) connected to the one end of a crankshaft 7a of the engine 7.

Among the cooling devices 8 to 11 the radiator 8 is placed at the closest position to the cooling fan (i.e., the most downstream side against the flow of the cooling air) and at the front side of the radiator 8 (upstream side against the flow of the cooling air), the turbocharger cooler 11 is positioned in the upward direction and the oil cooler 9 and the air conditioner capacitor 10 are positioned in the lower direction. The oil cooler 9 is swingably supported by one side of the left side or the right side of the radiator 8 via the upper and lower hinge members 13 so as to swing back and forth, whereby enabling it to change the postures between a cooling posture in which the oil cooler 9 is arranged in parallel with the radiator 8 so as to be cooled by the cooling fan and an open posture in which the oil cooler 9 is swung to the front side so that the lower half of the front face of the radiator 8 is exposed. The air conditioner capacitor 10 is attached to the front face of the oil cooler 9 via the left and right fitting brackets 14 and is structured to change the postures integrally with the oil cooler 9. Furthermore, the turbocharger cooler 11 is swingably supported by the upper front face of the radiator 8 via the left and right hinge members 15 so as to swing up and down and is structured to change the postures between a cooling posture in which the turbocharger cooler 11 is arranged in parallel with the radiator 8 so as to be cooled by the cooling fan and an open posture in which the turbocharger cooler 11 is swung from the cooling posture in the upward direction so that the lower half of the front face of the radiator 8 is exposed.

The reference numeral 16 denotes a lock member attached to the fitting bracket 14. The lock member 16 engages with the lock receiving member 17 provided at the radiator 8 side, thereby allowing the oil cooler 9 and the air conditioner capacitor 10 to be held at a cooling posture. Further, the reference numeral 18 denotes a shroud enclosing the cooling fan, which is to improve the flow of cooling air, thereby increasing the cooling effect.

Furthermore, the oil cooler 9 is connected with a hydraulic pipe 19 through which hydraulic fluid flows. Because the connection of the hydraulic pipe 19 to the oil cooler 9 is done via a swivel joint 20, the hydraulic pipe 19 can respond to the swingable posture change of the oil cooler 9 between the cooling posture and the open posture. A hose 21 is connected to the air conditioner capacitor 10, and the hose 21 has flexibility so as to respond to the swingable posture change of the oil cooler 9 integrally with the posture change of the air conditioner capacitor 10. Further, the air supply pipe 22 through which air compressed by the turbocharger 12 flows is connected to the turbocharger cooler 11, and has a section arranged on the upper part of the shroud 18 and the radiator 8 in a bellows-like shape so as to respond to the posture change of the turbocharger cooler 11 between the cooling posture and the open posture.

In the configuration of the first embodiment as described above, the radiator 8, the oil cooler 9, the air conditioner capacitor 10, and the turbocharger cooler 11 are cooled by cooling air flowing thereto by the rotation of the cooling fan, respectively. In this case, the oil cooler 9 and the turbocharger cooler 11 arranged at the front side of the radiator 8 can change the postures between the cooling posture in which the oil cooler 9 and the turbocharger cooler 11 are arranged in parallel with the radiator 8 and an open posture in which the front face side of the radiator 8 is exposed. The air conditioner capacitor 10 arranged at the front side of the oil cooler 9 changes the postures integrated with the posture change of the oil cooler 9.

As a result, although the radiator 8, the oil cooler 9, the air conditioner capacitor 10, the turbocharger cooler 11 are arranged to be superposed back and forth against the flow of the cooling air, the oil cooler 9, the air conditioner capacitor 10, and the turbocharger cooler 11 arranged at the front side are held at an open posture, thereby making it possible to carry out maintenance such as cleaning, inspection, and repair of the radiator 8 arranged at the rear side. Maintenance of the oil cooler 9 arranged between the radiator 8 and the air conditioner capacitor 10 also can be performed by allowing the oil cooler 9 to be held at an open posture so that the rear face side of the oil cooler 9 is exposed. As such, maintenance of the cooling device at the rear side can be performed without removing the cooling device arranged at the front side, thereby improving workability in maintenance.

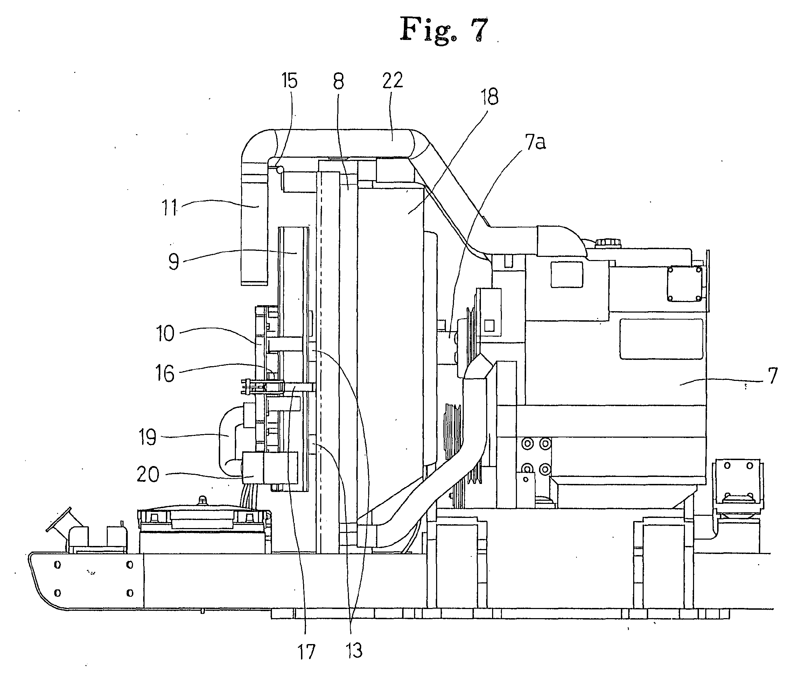

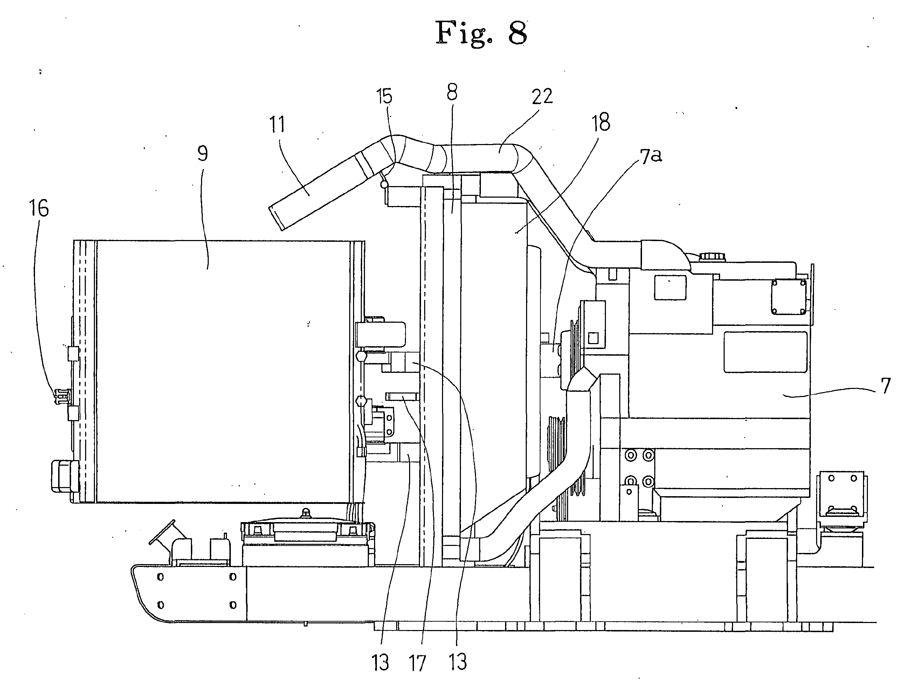

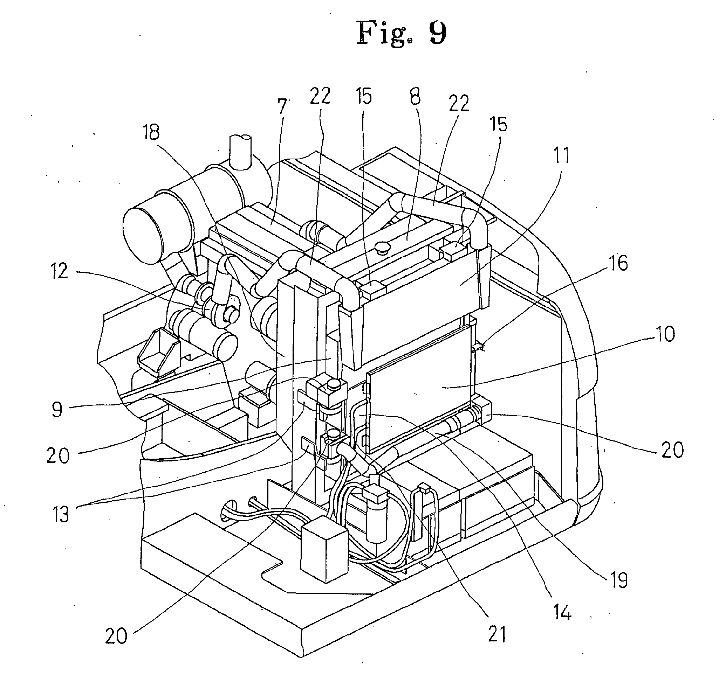

Additionally, the present invention is not limited to the first embodiment of the present invention. For example, as the second embodiment shown in Fig. 7 through Fig. 9, as well as the first embodiment, the present invention also can be adapted to the configuration in which the oil cooler 9 is large sized and the turbocharger cooler 11 and the air conditioner capacitor 10 are arranged up and down at the front side of the oil cooler 9.

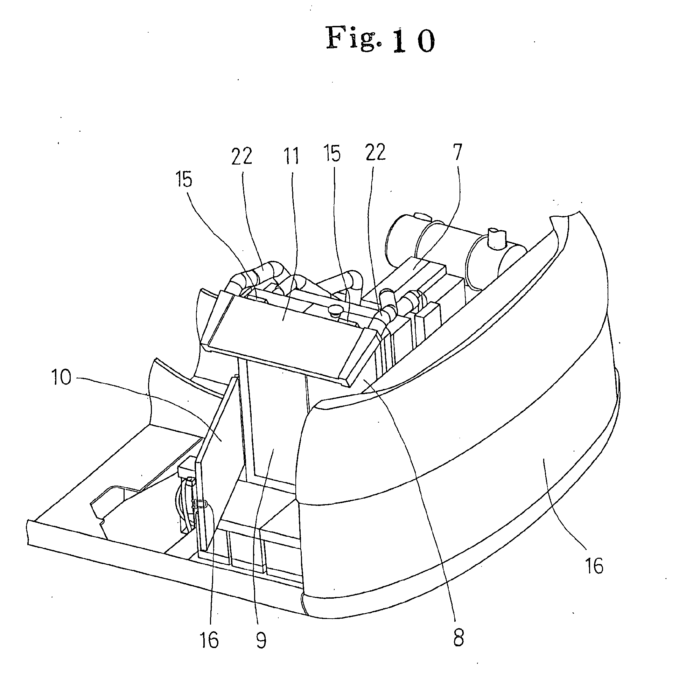

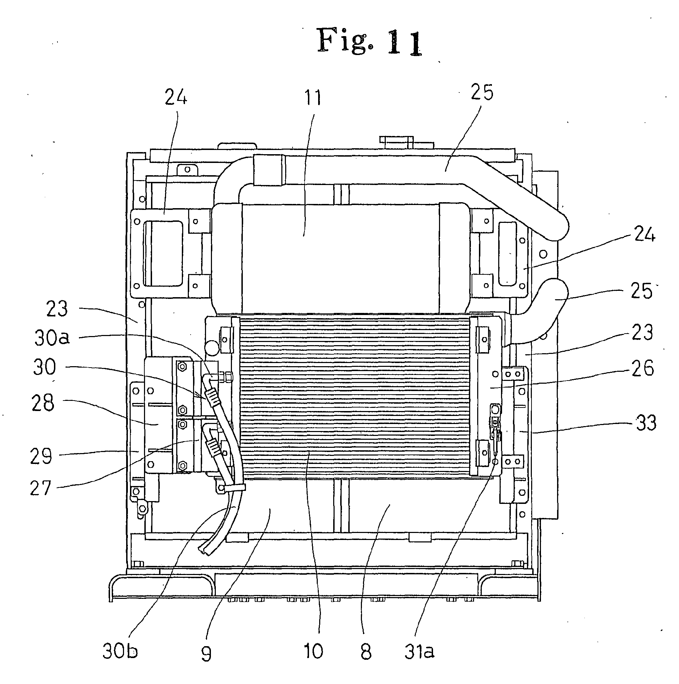

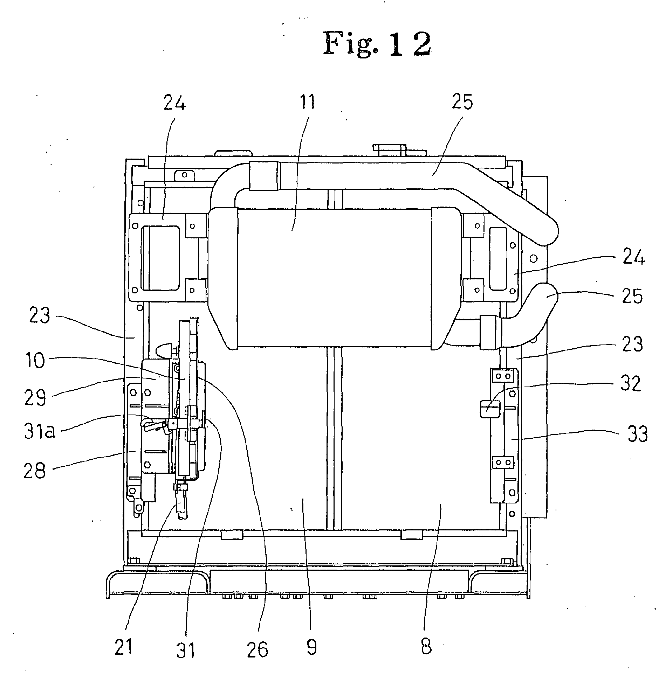

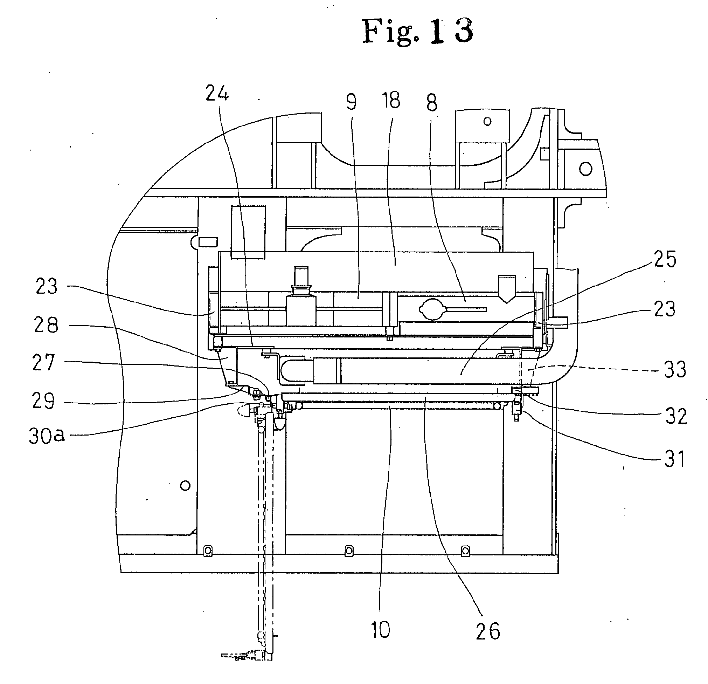

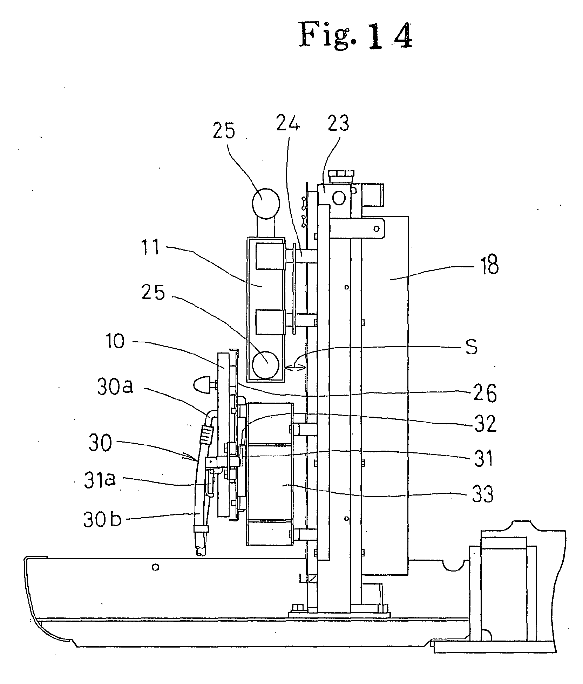

The configurations shown in the first and second embodiments are the Back To Back (BTB) type in which the oil cooler 9 and the radiator 8 are arranged to be superposed back and forth against the flow of the cooling air, however, the present invention also can be adapted to a configuration of the Side By Side (SBS) type as shown in the third embodiment shown in Fig. 10 and the fourth embodiment shown in Fig. 11 through Fig. 14 in which the oil cooler 9 and the radiator 8 are arranged adjacent to each other at the left and right sides.

In the configuration shown in the third and fourth embodiments, on the front side of the oil cooler 9 and the radiator 8 that are arranged to be adjacent to each other at left and right sides, the turbocharger cooler 11 is arranged at the upper part and the air conditioner capacitor 10 is arranged at the lower part. However, in the configuration of the third embodiment, the turbocharger cooler 11 is swigably supported by the oil cooler 9 and the radiator 8 so as to swing up and down and is structured to change the posture between the cooling posture and the open posture. On the other hand, the air conditioner capacitor 10 is supported by the oil cooler 9 so as to swing horizontally and is structured to change the posture between the cooling posture and the open posture.

In the configuration shown in the third embodiment, maintenance such as cleaning, inspection, repair of the oil cooler 9 and the radiator 8 arranged at the rear side can be performed by allowing the air conditioner capacitor 10 and the turbocharger cooler 11 arranged at the front side to be held at an open posture.

Further, in the fourth embodiment, it is configured such that only the air conditioner capacitor 10 changes the postures between the cooling posture and the open posture.

Specifically, in the configuration shown in the fourth embodiment, the turbocharger cooler 11 is bolted to the front face of the case frame 23 in which the oil cooler 9 and the radiator 8 are assembled via the left and right fitting brackets 24. In this case, between the turbocharger cooler 11, the oil cooler 9 and the radiator 8, an appropriate space S through which a cleaning worker can visually observe the core sections of the cooling devices 8, 9, and 11 from the lower direction of the turbocharger cooler 11 is secured. In Fig. 11 to Fig. 14, the reference numeral 25 denote an air supply pipe connected to the turbocharger cooler 11, however, because in the fourth embodiment, it is structured so that the turbocharger cooler 11 does not change the postures, thus the air supply pipe 25 is not required to deform, the configuration of the fourth embodiment differs from the configurations in the first through embodiments, thereby using the conventional general-purpose air supply pipe 25.

On the other hand, in the configuration of the fourth embodiment, the air conditioner capacitor 10 is supported by and fixed to a square frame-like support member 26 and a pair of upper and lower hinge 27 are attached to the left end section of the support member 26 at the one side. At the left side of the case frame 23 in which the oil cooler 9 and the radiator 8 are assembled, a first support bracket 28 protruding in the frontward direction is fixed. At the first support bracket 28, the second support bracket 29 protruding in the right direction is fixed. And the pair of hinges 27 are attached to the second support bracket 29 at the other side so that the support member 26 can be pivotably swung back and forth around the pin shaft of the hinge 27. As a result, the air conditioner capacitor 10 is structured to change the postures integrally with the support member 26 between the cooling posture in which the air conditioner capacitor 10 is arranged in parallel with the radiator 8 and the oil cooler 9 so as to be cooled by the cooling fan and an open posture in which the air conditioner capacitor 10 is swung from the cooling posture to the front side so that the front face lower halves of the radiator 8 and the oil cooler 9 are opened.

The pipe 30 through which the cooling medium flows is connected to the left end of the air conditioner capacitor 10, and the one side of the pipe 30 to which the air conditioner capacitor 10 is connected is composed of a steel pipe 30a. A flexible hose 30b is connected to the tip end of the steel pipe 30a so as to respond to the above-described posture change of the air conditioner capacitor 10. The above steel pipe 30a is designed to slightly project from the left end of the air conditioner capacitor 10 to the left outside and to bend forward, thereby preventing the pipe 30 from interfering with other members such as the hinge 27 and the second support bracket 29 when the air conditioner capacitor 10 has an open posture.

In Fig. 11 to Fig. 14, the reference numeral 31 denotes a latching device with a handle 31a provided at the right side of the support member 26, and the reference numeral 32 denotes a latch receiving fixture provided at the third support bracket 33 fixed to the right side part of the case frame 23 so as to be engageably locked by the latching device 31, thereby allowing the air conditioner capacitor 10 to be held at a cooling posture, and at the same time allowing an operator to swing the air conditioner capacitor 10 with a light control force.

In the configuration of the fourth embodiment as described above, the oil cooler 9 and the radiator 8 are arranged adjacent to each other left and right, at the front side of these oil cooler 9 and radiator 8, the turbocharger cooler 11 is placed at the upper side and the air conditioner capacitor 10 is placed at the lower side.

When the cooling device in this configuration is cleaned, the air conditioner capacitor 10 is allowed to be held at an open posture, thereby the rear face side of the air conditioner capacitor 10, and the front face lower halves of the oil cooler 9 and of the radiator 8 are exposed, thus these parts can be easily cleaned. On the other hand, as described above, between the turbocharger cooler 11, the oil cooler 9, and the radiator 8, the appropriate space S through which a cleaning worker can visually observe the core section of the cooling devices from the lower part of the turbocharger cooler 11 is secured. As a result, the cleaning worker standing at ground level can visually observe from the lower direction the core section of the cooling device by allowing the air conditioner capacitor 10 arranged at the lower side of the turbocharger cooler 11 to be held at an open posture, thereby allowing the cooling devices to be cleaned easily without damaging the core section, thus improving workability.

Additionally, in the configuration of the fourth embodiment, only the air conditioner capacitor 10 among the cooling devices provided at the front side of the oil cooler 9 and the radiator 8 is structured to change the postures between the cooling posture and the open posture, and the turbocharger cooler 11 is bolted. Thus, when repair of the oil cooler 9 and the radiator 8 is performed, the turbocharger cooler 11 is required to be removed. But in case of a construction machine, such as a hydraulic shovel which works at construction site with lots of dust, cleaning of cooling devices is required to be frequently performed, cleaning can be performed without removing the turbocharger cooler 11 while observing the core section.

Further in the fourth embodiment, the air conditioner capacitor 10 which is arranged at the lower side among the cooling devices arranged adjacent to each other at the upper and lower sides is structured so as to change the postures. Thus, by allowing the air conditioner capacitor 10 to be held at an open posture, an operator responsible for cleaning can visually observe appropriate space S between the turbocharger cooler 11, the oil cooler 9 and the radiator 8 from the lower direction, thereby a cleaning worker can clean at ground level (or in a condition where a cleaning worker stands on the crawler upper face in the case of a large construction machine) avoiding trouble such as climbing on the upper face of the upper rotating body 3 to clean the cooling device, thus contributing to improvements in workability.

Further, the present invention can also be adapted to a configuration in which only the air conditioner capacitor is arranged at the front side or at the rear side of the radiator and/or the oil cooler or a configuration in which the air conditioner capacitor and the turbocharger cooler are arranged to be superposed back and forth, for example.

In the second, third and fourth embodiments, components identical to those in the first embodiment are provided with the same reference numerals.

### [Industrial Applicability]

As described above, a cooling device in a construction machine according to the present invention can be effectively used for cooling devices including an oil cooler and a radiator that is arranged by the Back To Back (BTB) or the Side By Side (SBS) method in a construction machine such as a hydraulic shovel, more specifically, the cooling device of the present invention is particularly suitable for cooling devices in which the air conditioner capacitor or the turbocharger cooler is arranged at the front side of the radiator and/or the oil cooler.

## Claims

1. A cooling device in a construction machine in which a plurality of cooling devices including an air conditioner capacitor are arranged to be superposed back and forth against the flow of the cooling air, wherein the air conditioner capacitor is structured to change the postures between a cooling posture in which the air conditioner capacitor is arranged in parallel with another cooling device and an open posture in which the front side or the rear side of the cooling device is exposed.

2. The cooling device in a construction machine according to Claim 1 , in which the air conditioner capacitor and a turbocharger cooler are arranged at the front or rear sides of an oil cooler and/or a radiator against the flow of the cooling air, wherein the air conditioner capacitor and the turbocharger cooler are structured to change the postures between the cooling posture in which the air conditioner capacitor and the turbocharger cooler are provided in parallel with the oil cooler and/or the radiator, and an open posture in which the front side or the rear side of the oil cooler and/or the radiator is exposed.

3. The cooling device in a construction machine according to Claim 1, in which the air conditioner capacitor and a turbocharger cooler are arranged at the front and rear sides of an oil cooler and/or a radiator against the flow of the cooling air, wherein the air conditioner capacitor is structured to change the postures between the cooling posture in which the air conditioner capacitor is arranged in parallel with the oil cooler and/or the radiator and an open posture in which the front side or the rear side of the oil cooler and/or the radiator is exposed.

4. The cooling device in a construction machine according to Claim 2 or 3, wherein the oil cooler and the radiator are arranged adj acent to each other from side to side against the flow of the cooling air.

5. The cooling device in a construction machine according to Claim 2 or 3, wherein the oil cooler and the radiator are arranged to be superposed back and forth against the flow of the cooling air.

6. The cooling device in a construction machine according to Claim 5, wherein the oil cooler is structured to change the postures between the cooling posture in which the oil cooler is arranged in parallel with the radiator and an open posture in which the oil cooler is arranged such that the front side or the rear side of the radiator is exposed.

7. The cooling device in a construction machine according to Claim 1, 2, 3, 4, 5, or 6, wherein the air conditioner capacitor and/or the turbocharger cooler is/are supported by the upper part of the radiator and/or the oil cooler so as to swing up and down.

8. The cooling device in a construction machine according to Claim 1, 2, 3, 4, 5, or 6, wherein the air conditioner capacitor and/or the turbocharger cooler is/are supported by the left and right sides of the radiator or the oil cooler so as to swing back and forth.

9. The cooling device in a construction machine according to Claim 1, 2, 3, 4, 5, 6, 7 or 8, wherein a pipe connected to the air conditioner capacitor and/or the turbocharger cooler can be deformed in accordance with the posture changes of the air conditioner capacitor and/or the turbocharger cooler.
